(19) Europäisches Patentamt
European Patent Office
Office européen des brevets

(11) EP 2 501 054 A1

(12) EUROPEAN PATENT APPLICATION

(43) Date of publication:
19.09.2012 Bulletin 2012/38

(51) Int Cl.:
*H04B 7/08* (2006.01)

(21) Application number: 11305301.1

(22) Date of filing: 17.03.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Alcatel Lucent
75007 Paris (FR)

(72) Inventors:
• Chen, Yejian
70191, Stuttgart (DE)
• Ten Brink, Stephan
70469, Stuttgart (DE)

(74) Representative: 2SPL Patentanwälte
Postfach 15 17 23
80050 München (DE)

(54) **Data signal detection using channel matrix decomposition**

(57) A concept for detecting a first and a second data signal from a plurality of receive signals, the first and the second data signal being comprised in a plurality of transmitted data signals being transmitted using a plurality of transmit antennas and being received using a plurality of receive antennas. An apparatus 100 may comprise an input 110 for a radio channel matrix H, representing a radio channel between the plurality of transmit antennas and the plurality of receive antennas, the radio channel matrix H having at least one channel coefficient for each combination of one of the plurality of transmit antennas and one of the plurality of receive antennas. The apparatus 100 may further comprise means 120 for determining a first and a second sub-matrix based on the radio channel matrix H, the first and the second sub-matrix having less coefficients than the radio channel matrix H and the first and the second sub-matrix having different coefficients and means 130 for generating modified first and second receive signals based on the radio channel matrix H and the first and the second sub-matrix. The apparatus may further comprise means 140 for calculating first reliability information on the first and second data signal based on the first sub-matrix and the modified first receive signals, and for calculating second reliability information on the first and second data signal based on the second sub-matrix and the modified second receive signals. The apparatus 100 may further comprise an output 150 for detecting the first and the second data signal based on the first and the second reliability information.

Figure 1a

Printed by Jouve, 75001 PARIS (FR)

**Description**

The present invention relates to data signal detection in received radio signals, more particularly but not exclusively to data signal detection in a multiple-input-multiple-output (abbreviated as MIMO) system.

Background

Multiple-Input Multiple-Output (MIMO) antenna techniques can significantly increase the data rates by exploiting spatial multiplexing, and/or achieve additional diversity gains by applying space-time coding, cf. Foschini, G. J. and Gans, M. J.; "On limits of wireless comunications in a fading environment when using multiple antennas," Wireless Personal Communications, vol.6, no.3, pp.311—335, Mar. 1998; Telatar, I. E.; "Capacity of multi-antenna Gaussian channels," European Transactions on Telecommunications, vol.10, no.6, pp.585-595, Nov. 1999; Alamouti, S. M.; "A simple transmit diversity technique for wireless communications," IEEE Journal on Selected Areas in Communications, vol.16, no.8, pp.1451-1458, Oct. 1998. Nevertheless, with the ever increasing demands for higher data throughput and higher spectral efficiency, new system requirements have been defined for the 4-th Generation (4G as abbreviation) and Beyond 4G (B4G as abbreviation) wireless networks. Thus, new key technologies need to be taken into account.

For example, in Boudreau, G.; Panicker, J.; Ning Guo; Rui Chang; Neng Wang; Vrzic, S.; "Interference Coordination and Cancellation for 4G Networks," IEEE Communications Magazine, vol.47, no.4, pp.74-81, Apr. 2009, the authors show that interference coordination in 4G networks can be achieved by a combination of physical layer techniques such as Inter-Cell Interference Cancellation (ICIC), MIMO, Spatial Division Multiple Access (SDMA), adaptive beamforming, sphere decoding, cf. Larsson, E.G.; "MIMO Detection Methods: How They Work," IEEE Signal Processing Magazine, vol.26, no.3, pp.91-95, May 2009, Windpassinger, C.; Lampe, L.; Fischer, R.F.H.; Hehn, T.; "A performance study of MIMO detectors," IEEE Transactions on Wireless Communications, vol.5, no.8, pp.2004—2008, Aug. 2006, Hochwald, B.M.; ten Brink, S.; "Achieving Near-Capacity on a Multiple-Antenna Channel," IEEE Transactions on Communications, vol.51, no.3, pp.389-399, Mar. 2003. Other concepts are network MIMO, cf. Foschini, G.J.; Karakayali, K.; Valenzuela, R.A.; "Coordinating multiple antenna cellular networks to achieve enormous spectral efficiency," IEE Proceedings Communications, vol.153, pp.548-555, Aug. 2006, Huang, H.; Trivellato, M.; Hottinen, A.; Shafi, M.; Smith, P.; Valenzuela, R.; "Increasing downlink cellular throughput with limited network MIMO coordination," IEEE Transactions on Wireless Communications, vol.8, no.6, pp.2983-2989, Jun. 2009, and Coordinated Multi-Point transmission and reception (abbreviated as CoMP).

Obviously, the challenges for high data throughput, high spectral efficiency, and better coverage have created new interest in large MIMO systems, with possibly distributed antenna techniques Mohammed, S.K.; Zaki, A.; Chockalingam, A.; Rajan, B.S.; "High-Rate Space-Time Coded Large-MIMO Systems: Low-Complexity Detection and Channel Estimation," IEEE Journal of Selected Topics in Signal Processing, vol.3, no.6, pp.958-974, Dec. 2009, and thus refined considerations regarding the performance/complexity trade-off. On the other hand, thanks to technology and silicon integration advances, larger antenna array configurations with power and cost efficient detection algorithms are becoming feasible.

Linear MIMO detection algorithms, i.e. Zero-Forcing (abbreviated as ZF), or Minimum Mean Square Error (abbreviated as MMSE), are well known for their low computational complexity, cf. McKay, M.R.; Collings, I.B.; "Capacity and Performance of MIMO-BICM With Zero-Forcing Receivers," IEEE Transactions on Communications, vol.53, no.1, pp.74-83, Jan. 2005, Seethaler, D.; Matz, G.; Hlawatsch, F.; "An Efficient MMSE-Based Demodulator for MIMO Bit-Interleaved Coded Modulation," in Proceedings of IEEE Global Telecommunications Conference 2004 (GLOBECOM'04), pp.2455-2459, Nov.-Dec. 2004. Linear detection algorithms may have low computational requirements. Nevertheless, the diversity order will decrease, if the number of transmission signal streams increases. In the reality, MMSE algorithm suffers from noise estimation errors and serious degradation under block fading channel conditions, and ZF algorithms have to combat against noise amplification and the ill-conditioned channel matrix, if $M_R \leq M_T$ holds, where $M_R$ and $M_T$ denote the number of receive and transmit antennas, respectively.

Maximum Likelihood Detection (abbreviated as MLD), or Maximum a posteriori Probability (abbreviated as APP) detection in the context of soft channel decoding, may deliver the upper bound performance. Nevertheless, its high computational complexity often cannot be afforded within MIMO systems with larger antenna configurations, in the following also referred to as massive MIMO systems. Sphere decoding provides another successful detection strategy to reduce the number of signal candidates, cf. the above references. Generally, it is an effective solution to approach the APP upper bound performance. However, the search depth of sphere detection may significantly vary with respect to different channel realizations, posing a challenge to hardware implementation.

In Ariyavisitakul, S.L.; Jun Zheng; Ojard, E.; Joonsuk Kim; "Subspace Beamforming for Near-Capacity MIMO Performance," IEEE Transactions on Signal Processing, vol.56, no.11, pp.5729-5733, Nov. 2008, a subspace beamforming method is presented, in which the MIMO channel matrix is block-wise diagonalized by certain matrix decomposition approaches, limiting the number of jointly detected data streams to two.

**EP 2 501 054 A1**

Summary

Embodiments can be based on the finding that a subspace MIMO detection algorithm can be based on matrix triangularization, as e.g. QR- or Cholesky triangularization, which may enable utilization of several groups of separate detection sets. The data streams within each set can be detected using the APP algorithm. Embodiments may be based on a further finding that a low reliable data stream can be put into several detection sets, and thus additional diversity can be gathered. Such an embodiment may in the following also be referred to as overlapped subspace detection (abbreviated as OSD).

Embodiments can be based on the finding that coordinated multipoint transmission (abbreviated as CoMP) can be recognized as one of the key technologies in wireless communication. The CoMP concept is intensively investigated not only in research, but also in industry for possible deployment and standardization. This triggers consequently the recent research trend, which moves to Multiple Input Multiple Output (MIMO) signal processing with large number of transmit and receive antenna elements. Embodiments may therefore also relate to massive MIMO system.

Embodiments may be based on the finding that a low-complexity MIMO receive algorithm can be utilized in massive MIMO. Embodiments may allow to possibly increase the number of transmission signal streams. In embodiments the complexity of MIMO signal processing can be made adjustable, by repeating a basic function block. Hence, embodiments may be appropriate to hardware implementation, and they may be able to approach the optimum performance, namely that of highly reliable or high complexity detection approaches, such as maximum A Posteriori Probability (APP) detection algorithm.

Embodiments provide an apparatus for detecting a first and a second data signal from a plurality of receive signals, the first and the second data signal being comprised in a plurality of transmitted data signals being transmitted using a plurality of transmit antennas and being received using a plurality of receive antennas. In other words, embodiments may relate to the detection of multiple data signals, here in a basic embodiment referred to as the first and the second data signal, from a MIMO receive channel. The first and second data signal may refer to a single user, i.e. one user having parallel data streams, or they may refer to different users.

The apparatus comprises an input for a radio channel matrix, representing a radio channel between the plurality of transmit antennas and the plurality of receive antennas, the radio channel matrix having at least one channel coefficient for each combination of one of the plurality of transmit antennas and one of the plurality of receive antennas. The apparatus further comprises means for determining a first and a second sub-matrix based on the radio channel matrix, the first and the second sub-matrix having less coefficients than the radio channel matrix and the first and the second sub-matrix having different coefficients. In other words, from a full MIMO radio channel matrix sub-matrices having a lower dimension can be determined.

The apparatus further comprises means for generating modified first and second receive signals based on the radio channel matrix and the first and the second sub-matrix. Furthermore, the apparatus comprises means for calculating first reliability information on the first and second data signal based on the first sub-matrix and the modified first receive signals, and for calculating second reliability information on the first and second data signal based on the second sub-matrix and the modified second receive signals. The apparatus may further comprise an output for detecting the first and the second data signal based on the first and the second reliability information. In other words, embodiments may select certain data signals in order to determine a subset based on which sub-matrices can be derived from the full MIMO radio channel matrix. The selection of the data signals for the set can be based on quality information such as for example, a Log-Likelihood-Ratio, a signal-to-noise ratio, a signal-to-noise-plus-interference-ratio, etc., which may be determined or estimated by any other detection concept.

In embodiments the apparatus may further comprise means for estimating the radio channel matrix between the plurality of transmit antennas and the plurality of receive antennas, which is coupled to the input, and the apparatus may further comprise means for detecting the first and the second data signal, which is coupled to the output. The means for determining can be adapted for determining the first and second sub-matrix by determining quality information on the first and second data signal based on the plurality of receive signals and the radio channel matrix, the first and the second sub-matrix can be based on a modification of the radio channel matrix based on the quality information.

The first sub-matrix can be based on a first reordering operation on the radio channel matrix based on the quality information and a subsequent decomposition of the radio channel matrix, and the second sub-matrix can be based on a second reordering operation on the radio channel matrix based on the quality information and a subsequent decomposition of the radio channel matrix. The first sub-matrix can be a sub-matrix of a triangular matrix resulting from the decomposition of the reordered radio channel matrix **H** according to the first reordering operation, and the second sub-matrix can be a sub-matrix of a triangular matrix resulting from the decomposition of the reordered radio channel matrix according to the second reordering operation.

The reordering may correspond to a selection of a subset of transmit signals, the subset of transmit signals can be selected based on the quality information, where for the first reordering operation transmit signals can be selected among which the quality information indicates the best quality for the first data signal. For the second reordering operation transmit signals may be selected among which the quality information indicates the best quality for the second data signal. Alternatively, when the quality information indicates a better quality for the first data signal than for the second data signal, the second data signal can be selected in both reordering operations or for both subsets. In other words, in some embodiments signals for which a high reception quality was determined may be selected for a subset. In other embodiments certain combinations of signals may be selected for one particular set, i.e. a high and a low quality signal. In embodiments low quality signals may also be selected for multiple subsets such that a diversity gain can be achieved. The matrix decompositions may, for example, correspond to a QR-decomposition or a Cholesky-decomposition. The means for generating can be adapted for generating the modified first and second receive signals based on a result of the matrix decomposition.

The means for calculating may be adapted for calculating Log-Likelihood-Ratios of transmit symbols of the first and the second data signal as reliability information. The means for detecting can be adapted for detecting the first and the second data signal based on a highly reliable or high complexity detection approach, such as Maximum-Likelihood-Detection. The apparatus can be further adapted for detecting data signals for all of the transmitted data signals and the means for determining can be adapted for determining at least two sub-matrices based on the radio channel matrix, wherein the at least two sub-matrices comprise at least one channel coefficient for each of the plurality of transmitted data signals.

The means for determining can be adapted for determining subsets of data signals and for determining one sub-matrix for each subset of data signals, where each of the transmitted data signals can be comprised in at least one of the subsets. The means for generating can be adapted for generating modified received signals for each subset and the means for calculating may be further adapted for calculating reliability information for each data signal in each subset. The means for detecting can be adapted for detecting each data signal based on the reliability information. The means for detecting can be adapted for performing a highly reliable or high complexity detection approach, such asMaximum-Likelihood-Detection, per subset and for combining the detection results of each subset to detect the data signals. The means for determining may be adapted for determining the subsets such that each of the transmitted signals is only comprised in one subset or such that at least one of the transmitted signals is comprised in at least two subsets.

Embodiments may also provide a method for detecting a first and a second data signal from a plurality of receive signals, the first and the second data signal being comprised in a plurality of transmitted data signals being transmitted using a plurality of transmit antennas and being received using a plurality of receive antennas. The method may comprise a step of inputting a radio channel matrix between the plurality of transmit antennas and the plurality of receive antennas, the radio channel matrix **H** having at least one channel coefficient for each combination of one of the plurality of transmit antennas and one of the plurality of receive antennas. The method may further comprise determining a first and a second sub-matrix based on the radio channel matrix, the first and the second sub-matrix having less coefficients than the radio channel matrix and the first and the second sub-matrix having different coefficients, and generating modified first and second receive signals based on the radio channel matrix and the first and the second sub-matrix. Moreover, the method may comprise calculating first reliability information on the first and second data signal based on the first sub-matrix and the modified first receive signals, and for calculating second reliability information on the first and second data signal based on the second sub-matrix and the modified second receive signals, and detecting the first and the second data signal based on the first and the second reliability information.

Furthermore the embodiments may provide a computer program having a program code for performing one of the above mentioned methods when the computer program is executed on a computer or processor.


Brief description of the Figures

Some other features or aspects will be described using the following non-limiting embodiments of apparatuses and/or methods and/or computer programs by way of example only, and with reference to the accompanying figures, in which

Figure 1a shows a block diagram of an embodiment of an apparatus;

Figure 1b shows a flow chart an embodiment of a method;

Figure 2 illustrates MIMO subspaces determined by a subset;

Figure 3 illustrates simulation results obtained for embodiments, showing uncoded BER versus SNR;

Figure 4 illustrates simulation results obtained for embodiments, showing achievable rates versus SNR;

Figure 5 illustrates simulation results obtained for embodiments, showing uncoded BER versus SNR;

Figure 6 illustrates simulation results obtained for embodiments, showing achievable rates versus SNR;

Figure 7 illustrates a pseudo code of an embodiment providing a method;

Figure 8a illustrates link level simulation parameter settings;

Figure 8b illustrates a comparison of embodiments considering computational complexity in terms of real multiplications, additions and divisions; and

Figure 8c illustrates a performance comparison of embodiments considering normalized computational complexity.

Description of some Embodiments

The illustrative description of the embodiments will be given in details combined with the appended figures. In the following, it is assumed that a $M_T \times M_R$ MIMO system is given by equation

$$\mathbf{y} = \mathbf{Hs} + \mathbf{n} .$$

The transmit signal vector is denoted as $\mathbf{s}$. Additionally, it holds $E[\mathbf{ss}^H] = (E_s/M_T) \cdot \mathbf{I}_{M_T}$ and $E_s = 1$. The vector $\mathbf{n}$ stands for Additive White Gaussian Noise (AWGN as abbreviation) with $E[\mathbf{nn}^H] = \sigma \cdot \mathbf{I}_{M_R}$. The MIMO radio channel matrix is $\mathbf{H}$, whose arbitrary element $[\mathbf{H}]_{i,j}$ representing the radio channel between transmit antenna $i$ and receive antenna j, obeys independent and identically distributed complex Gaussian distribution, i.e., $[\mathbf{H}]_{i,j} \sim CN(0, 1)$.

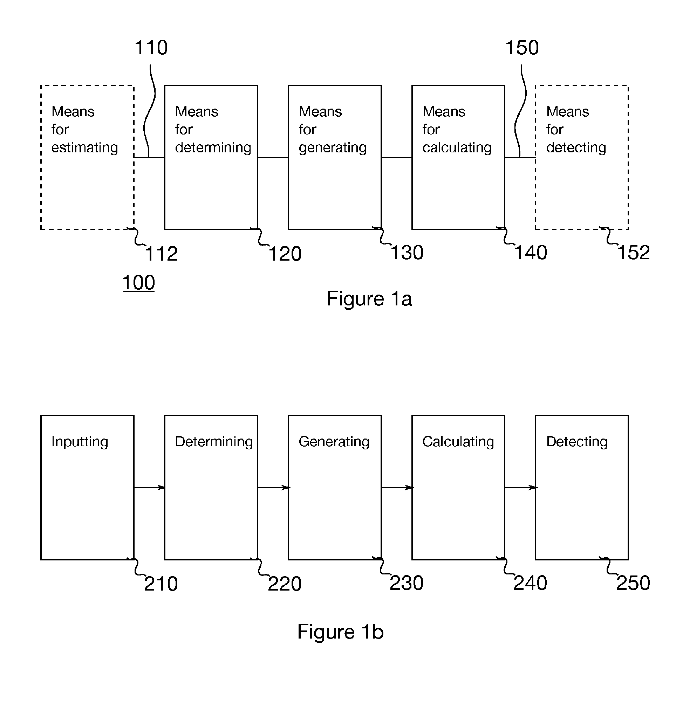

Figure 1a shows a block diagram of an embodiment of an apparatus 100 for detecting a first and a second data signal from a plurality of receive signals, the first and the second data signal being comprised in a plurality of transmitted data signals being transmitted using a plurality of transmit antennas and being received using a plurality of receive antennas. In other words, a MIMO transmission system is considered. The apparatus comprises an input 110 for a radio channel matrix $\mathbf{H}$, representing a radio channel between the plurality of transmit antennas and the plurality of receive antennas, the radio channel matrix $\mathbf{H}$ having at least one channel coefficient for each combination of one of the plurality of transmit antennas and one of the plurality of receive antennas. The apparatus 100 further comprises means 120 for determining a first and a second sub-matrix based on the radio channel matrix $\mathbf{H}$, the first and the second sub-matrix having less coefficients than the radio channel matrix $\mathbf{H}$ and the first and the second sub-matrix having different coefficients. In other words multiple mutually different sub-matrices are considered.

The apparatus 100 further comprises means 130 for generating modified first and second receive signals based on the radio channel matrix and based on the first and the second sub-matrix. The apparatus comprises means 140 for calculating first reliability information on the first and second data signal based on the first sub-matrix and the modified first receive signals, and for determining second reliability information on the first and second data signal based on the second sub-matrix and the modified second receive signals. The apparatus 100 further comprises an output 150 for detecting the first and the second data signal based on the first and the second reliability information.

In embodiments the apparatus 100 may further comprise means 112 for estimating the radio channel matrix $\mathbf{H}$ between the plurality of transmit antennas and the plurality of receive antennas, which is coupled to the input 110. In Figure 1a the boxes with broken lines represent optional features. In other words, in some embodiments, the radio channel estimate may be provided from the outside, e.g. from a radio transceiver. In other embodiments a radio channel estimator may be comprised in the apparatus 100. In embodiments, the apparatus may comprise means 152 for detecting the first and the second data signal, wherein means 152 is coupled to the output 150. In some embodiments the apparatus 100 may therefore provide a signal for detection at its output 152, or, it may comprise a detector itself and may provide the data signal, reliability information thereon, respectively.

In embodiments the means 120 for determining can be adapted for determining the first and second sub-matrix by determining quality information on the first and second data signal based on the plurality of receive signals and the radio channel matrix $\mathbf{H}$, the first and the second sub-matrix being based on a modification of the radio channel matrix $\mathbf{H}$ based on the quality information. Such quality in formation may be obtained differently in different embodiments. One possibility would be a Log-Likelihood-Ratio, e.g. obtained by ZF-filtering or ZF-equalization.

In ZF equalization-based detection, the ZF equalization matrix can be given by

$$\mathbf{W}_{ZF} = (\mathbf{H}^H \mathbf{H})^{-1} \mathbf{H}^H .$$

Hence, the detected signal can be represented by

$$\mathbf{s}_{ZF} = \mathbf{W}_{ZF}\mathbf{y} = (\mathbf{H}^H \mathbf{H})^{-1} \mathbf{H}^H \mathbf{H}\mathbf{s} + (\mathbf{H}^H \mathbf{H})^{-1} \mathbf{H}^H \mathbf{n} = \mathbf{s} + \mathbf{n}_{ZF}$$

where $\mathbf{n}_{ZF} = (\mathbf{H}^H \mathbf{H})^{-1}\mathbf{H}^H \mathbf{n}$ denotes the filtered noise vector. Let the covariance of vector $\mathbf{n}_{ZF}$ be considered. It yields straightforwardly

$$\mathbf{R}_{\mathbf{n}_{ZF}} = E\left[\mathbf{n}_{ZF}\mathbf{n}_{ZF}^H\right] = E\left[(\mathbf{H}^H \mathbf{H})^{-1}\mathbf{H}^H \mathbf{n}\mathbf{n}^H \mathbf{H}(\mathbf{H}^H \mathbf{H})^{-1}\right] = \sigma^2 E\left[(\mathbf{H}^H \mathbf{H})^{-1}\right] .$$

Hence, the instantaneous ZF post-processing noise variance of the $k$-th transmit data stream can be approximated by

$$\sigma^2_{p,ZF,k} = \sigma^2 \cdot \left[(\mathbf{H}^H \mathbf{H})^{-1}\right]_{k,k} .$$

Furthermore, assume that the ZF post-processing noise still obeys a complex Gaussian distribution. Considering ZF per antenna detection, the Log-Likelihood Ratio (LLR) of the j-th bit in the $k$-th transmit data stream can be given by

$$\mathrm{LLR}_{[\mathbf{s}_{ZF}]_k}^{(j)} \approx \log\left(\sum_{a_i \in A_j^1} \exp(-\frac{\left|[\mathbf{s}_{ZF}]_k - a_i\right|^2}{\sigma_{p,ZF,k}^2})\right) - \log\left(\sum_{a_i \in A_j^0} \exp(-\frac{\left|[\mathbf{s}_{ZF}]_k - a_i\right|^2}{\sigma_{p,ZF,k}^2})\right)$$

where $a_i$ stands for the $i$-th signal constellation, and $A_j^1$ and $A_j^0$ denote the subsets of the constellation candidates whose j-th bit is 1 and 0, respectively. In embodiments the LLR can be used as quality information, based on which subsets and the respective sub-matrices can be determined.

Linear detection algorithms, e.g. Minimum Mean Square Error (MMSE), Zero-Forcing (ZF), have low computational requirement. Nevertheless, the diversity order will decrease, if the number of transmission signal streams increases. In the reality, MMSE algorithm suffers from noise estimation error and serious degradation under block fading channel, and ZF algorithm has to combat against noise amplification and the ill-conditioned channel matrix, if $M_R \leq M_T$ holds, where $M_R$ and $M_T$ denote the number of receive and transmit antennas, respectively. In embodiments such algorithms may be utilized for evaluation of quality information based on which subsets and the respective sub-matrices can be determined.

The APP detection algorithm, which is also denoted as Maximum Likelihood Detection (MLD) algorithm, delivers the upper bound performance. Nevertheless, its extremely high computational requirement is not affordable within massive MIMO systems. Sphere decoding provides the detection strategy to reduce the number of signal candidates. Generally, it is an effective solution to approach the APP upper bound performance. Nevertheless, the search depth of MIMO detection varies from time to time with respect to different channel realizations. Thus, this will negatively influence the hardware implementation. Embodiments may therefore use one of the above linear detection algorithms to determine a subset of signals, which may then be detected using APP.

The APP algorithm can jointly detect the $M_T$ transmit data streams, considering the conditional Probability Density Function

$$p(\mathbf{y} \mid a_1, a_2, \cdots, a_{M_T}) = \left( \frac{1}{\pi \sigma^2} \right)^{M_T} \exp\left( -\frac{\|\mathbf{y} - \mathbf{Ha}\|^2}{\sigma^2} \right)$$

where $\mathbf{a} = \begin{bmatrix} a_1 & a_2 & \cdots & a_{M_T} \end{bmatrix}^T$ denotes an arbitrary detection symbol vector candidate. Let B denote the set of constellation symbols, with $\{a_1, a_2, \cdots, a_{M_T}\} \subset B$  Thus, the Log-Likelihood Ratio (LLR) of the $j$-th bit in the $k$-th transmit data stream can be computed by

$$\mathrm{LLR}\,_{[\mathbf{y}]_k}^{(j)} = \log\left( \sum_{\mathbf{a}:\,[\mathbf{a}]_k \in B_{j,k}^1} \exp\left( -\frac{\|\mathbf{y} - \mathbf{Ha}\|^2}{\sigma^2} \right) \right) - \log\left( \sum_{\mathbf{a}:\,[\mathbf{a}]_k \in B_{j,k}^0} \exp\left( -\frac{\|\mathbf{y} - \mathbf{Ha}\|^2}{\sigma^2} \right) \right)$$

where $B_{j,k}^1$ and $B_{j,k}^0$ denote the subsets of the constellation candidates of the $k$-th data stream whose j-th bit is 1 and 0, respectively.

Embodiments will subsequently be discussed using results of point-to-point link layer simulations, which will be explained in the following. One figure of merit is the corresponding gap to the optimum performance. The capacity of the ergodic MIMO channel can be provided as

$$C = E\left[ \log_2 \left| \mathbf{I}_{M_R} + \frac{\rho}{M_T} \mathbf{HH}^H \right| \right]$$

where p denotes the Signal-to-Noise Ratio (abbreviated as SNR), defined by $\rho = E_s/\sigma^2$. Bit-wise mutual information can be computed to quantify the remaining gap to capacity, cf. ten Brink, S.; "Designing Iterative Decoding Schemes with the Extrinsic Information Transfer Chart," AEÜ International Journal of Electronics and Communications, vol.54, no.6, pp. 389-398, Nov. 2000. Let $p(\ell \mid X_{\mathrm{LLR}}^{(0)})$ and $p(\ell \mid X_{\mathrm{LLR}}^{(1)})$ denote the PDF of the LLR values under the condition that bit 0 and bit 1 are transmitted, respectively. The bit-wise mutual information can then be computed as

$$I = \frac{1}{2} \cdot \sum_{b=0,1} \int_{-\infty}^{+\infty} p(\ell \mid X_{\text{LLR}}^{(b)}) \cdot \log_2 \frac{2 p(\ell \mid X_{\text{LLR}}^{(b)})}{\sum_{c=0,1} p(\ell \mid X_{\text{LLR}}^{(c)})} \, d\ell \quad .$$

In order to explain the sub-matrix determination of embodiments, a $M_T \times M_R$ MIMO system is modeled by

$$\mathbf{y} = \mathbf{Hs} + \mathbf{n} \ .$$

An arbitrary channel matrix **H** is QR decomposable as **H = QR,** where **Q** is an $M_R \times M_R$ unitary matrix with $\mathbf{QQ}^H = \mathbf{I}_{M_R}$, and the $M_R \times M_T$ matrix **R** can be given by

$$\mathbf{R} = \left[ \begin{array}{c} \widetilde{\mathbf{R}}_{M_T \times M_T} \\ \hline \mathbf{0}_{(M_R - M_T) \times M_T} \end{array} \right]$$

where $\widetilde{\mathbf{R}}_{M_T \times M_T}$ is an $M_T \times M_T$ upper triangular matrix and $\mathbf{0}_{(M_R\text{-}M_T) \times M_T}$ is an $(M_R - M_T) \times M_T$ null matrix. Obviously, it holds

$$\mathbf{y}_{\text{QR}} = \mathbf{Q}^H \mathbf{y} = \mathbf{Q}^H (\mathbf{Hs} + \mathbf{n})$$

$$= \mathbf{Q}^H (\mathbf{QRs} + \mathbf{n}) = \mathbf{Rs} + \mathbf{Q}^H \mathbf{n}$$

$$= \mathbf{Rs} + \mathbf{n}_{\text{QR}} \ .$$

Notice that the covariance of noise vector $\mathbf{n}_{\text{QR}}$ can be given by

$$\mathbf{R}_{\mathbf{n}_{\text{QR}}} = E\left[ \mathbf{n}_{\text{QR}} \mathbf{n}_{\text{QR}}^{\ H} \right] = E\left[ \mathbf{Q}^H \mathbf{n} \mathbf{n}^H \mathbf{Q} \right] = \sigma^2 E\left[ \mathbf{Q}^H \mathbf{Q} \right] = \sigma^2 \mathbf{I}_{M_R} \ .$$

Namely, the filtered noise vector $\mathbf{n}_{\text{QR}}$ has the same long-term statistics as n. If $M_T = M_R$, the matrix R can be represented by

$$\mathbf{R} = \begin{bmatrix} R_{1,1} & R_{1,2} & \cdots & R_{1,M_T-2} & R_{2,M_T-1} & R_{1,M_T} \\ 0 & R_{2,2} & \cdots & R_{2,M_T-2} & R_{2,M_T-1} & R_{2,M_T} \\ 0 & 0 & \ddots & \vdots & \vdots & \vdots \\ \vdots & \vdots & \ddots & R_{M_T-2,M_T-2} & R_{M_T-2,M_T-1} & R_{M_T-2,M_T} \\ 0 & 0 & \cdots & 0 & R_{M_T-1,M_T-1} & R_{M_T-1,M_T} \\ 0 & 0 & \cdots & 0 & 0 & R_{M_T,M_T} \end{bmatrix}$$

It is noticed, that an arbitrary square sub-matrix of the lower part of **R** may establish a sub-MIMO system, i.e. may serve as sub-matrix in embodiments. In embodiments the corresponding signal streams of this sub-MIMO system can be independently detected, without considering the inter-stream interference from the rest of the signal streams out of this sub-MIMO system. Obviously, a full APP detection for the $M_T \times M_R$ MIMO system becomes significantly more complex when the number of data streams $M_T$ increases, while, however, applying the APP detection algorithm to the individual sub-MIMO systems still stays feasible. To further scale the complexity, there are several degrees of freedom to adjust the dimensions of the individual sub-MIMO systems.

In order to create and rank the different sets of signal streams, i.e. in order to determine the sub-matrices and subsets, embodiments may compute a metric $\mu_k$, which indicates the reliability of the $k$-th signal stream or data signal, and which may serve as quality information in embodiments. For instance, the metric or quality information can be the post-processing Signal-to-Interference-plus-Noise Ratio (abbreviated as SINR), or the symbol-wise LLR after simple linear pre-processing, such as ZF, MMSE. In the following, embodiments using the LLR of ZF detection as quality information or for the metric $\mu_k$ of the $k$-th signal stream or data signal as

$$\mu_k = \sum_{j=1}^{M} \mathrm{LLR}_{[\mathbf{s}_{\mathrm{ZF}}]_k}^{(j)}$$

are considered, where M denotes the number of bits per transmit antenna symbol. In embodiments, each APP detection set or sub-MIMO system may be based on a QR triangularization, the different sets can be obtained by exchanging the columns of the MIMO channel matrix **H** in order to group the specified signal streams into this detection set. In other words, in embodiments the first sub-matrix can be based on a first reordering operation on the radio channel matrix **H** based on the quality information and a subsequent decomposition of the radio channel matrix **H,** and the second sub-matrix can be based on a second reordering operation on the radio channel matrix **H** based on the quality information and a subsequent decomposition of the radio channel matrix **H.**

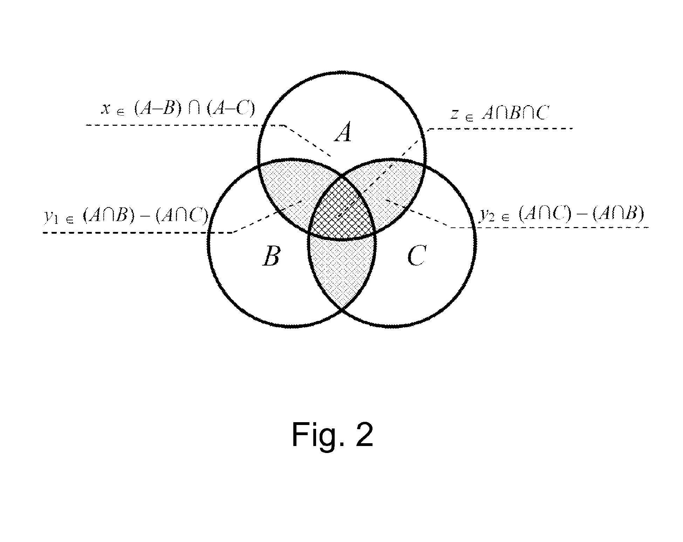

Figure 2 illustrates MIMO subspaces determined by a subset. In Figure 2 an exemplary illustration is provided, in which three detection sets A, B and C are defined. Obviously the union of sets A, B and C comprises the complete indexes of $M_T$ transmit data streams or data signals as

$$A \bigcup B \bigcup C = \left\{ 1, 2, \cdots, M_T - 1, M_T \right\}.$$

Without loss of generality, the set A is considered for the further description of embodiments. As illustrated in Figure 2, the signal streams x can be detected within one APP processing. Hence, they are assumed to have high reliability with respect to the corresponding metrics $\mu_k$. The signal streams $y_1$, $y_2$ and especially the signal streams z are assumed to be less reliable.

In embodiments, the reordering may correspond to a selection of a subset of transmit signals, the subset of transmit signals being selected based on the quality information. In the above described embodiment the reordering of the columns of the radio channel matrix **H** corresponds to the selection of a subset of transmit signals. For example, in the first reordering operation transmit signals can be selected among which the quality information indicates the best quality for the first data signal. In a second reordering operation transmit signals can be selected among which the quality information indicates the best quality for the second data signal. Alternatively, when the quality information indicates a better quality for the first data signal than for the second data signal, the second data signal can be selected in both reordering operations or for both subsets.

As it has already been mentioned above, in embodiments the matrix decompositions may correspond to a QR-decomposition or a Cholesky-decomposition. The means 130 for generating can be adapted for generating the modified first and second receive signals based on a result of the matrix decomposition. The means 140 for calculating can be adapted for calculating Log-Likelihood-Ratios of transmit symbols of the first and the second data signal as reliability information. The means 150 for detecting can be adapted for detecting the first and the second data signal based on a highly reliable or high complexity detection approach, such as Maximum-Likelihood-Detection.

In embodiments the apparatus 100 can be further adapted for detecting data signals for all of the transmitted data signals, wherein the means 120 for determining can be adapted for determining at least two sub-matrices based on the radio channel matrix **H,** wherein the at least two sub-matrices comprise at least one coefficient for each of the plurality of transmitted data signals. The means 120 for determining can be adapted for determining subsets of data signals and for determining one sub-matrix for each subset of data signals, where each of the transmitted data signals is comprised in at least one of the subsets.

The means 130 for generating can be adapted for generating modified received signals for each subset and the means 140 for calculating may be further adapted for calculating reliability information for each data signal in each subset. The means 150 for detecting can be adapted for detecting each data signal based on the reliability information. The means 150 can be adapted for performing a Maximum-Likelihood-Detection per subset and for combining the Maximum-Likelihood-Detection results of each subset to detect the data signals. The means 120 for determining can be adapted for determining the subsets such that each of the transmitted signals is only comprised in one subset or such that at least one of the transmitted signals is comprised in at least two subsets.

In other words, embodiments may create some sets of signal streams or data signals, which establish some sub-MIMO systems, which can accordingly be modeled using sub-matrices of lower dimensions. The dimension of a sub-MIMO system can be assumed to be low enough, so that e.g. the APP detection algorithm is still allowed, e.g. still within the complexity boundaries of an available hardware. In order to create the signal streams sets, a metric $\mu_k$ can be computed as quality information, which indicates the reliability *of k*-th signal stream, e.g. the first or second data signal, to be correctly detected. For instance, the metric can be the post-processing Signal-to-Interference-plus-Noise Ratio, or the symbol-wise Log-Likelihood Ratio after simple pre-processing. If, in an embodiment, each stream only appears once in a sub-MIMO system, such detection algorithm can be denoted as Non-Overlapped Subspace Detection (NOSD as abbreviation). In other embodiments, the high reliable and low reliable signal streams may be grouped in a set together, deploying APP detection, and a low reliable signal stream may appear in several different signal stream sets. In embodiments, the reliability of this signal stream may thus be improved due to additional diversity. To these embodiments it may also be referred to as Overlapped Subspace Detection (OSD as abbreviation) algorithm.

Figure 1b shows a flow chart an embodiment of a method for detecting a first and a second data signal from a plurality of receive signals, the first and the second data signal being comprised in a plurality of transmitted data signals being transmitted using a plurality of transmit antennas and being received using a plurality of receive antennas. The method comprises a step 210 of inputting a radio channel matrix **H**, representing a radio channel between the plurality of transmit antennas and the plurality of receive antennas, the radio channel matrix having at least one channel coefficient for each combination of one of the plurality of transmit antennas and one of the plurality of receive antennas. The method further comprises a step 220 of determining a first and a second sub-matrix based on the radio channel matrix **H,** the first and the second sub-matrix having less coefficients than the radio channel matrix and the first and the second sub-matrix having different coefficients. The method further comprises a step 230 of generating modified first and second receive signals based on the radio channel matrix **H** and the first and the second sub-matrix, and a step 240 of calculating first reliability information on the first and second data signal based on the first sub-matrix and the modified first receive signals, and for determining second reliability information on the first and second data signal based on the second sub-matrix and the modified second receive signals. The method further comprises a step 250 of detecting the first and the second data signal based on the first and the second reliability information.

Embodiments may further comprise a computer program having a program code for performing one of the above methods when the computer program is executed on a computer or processor.

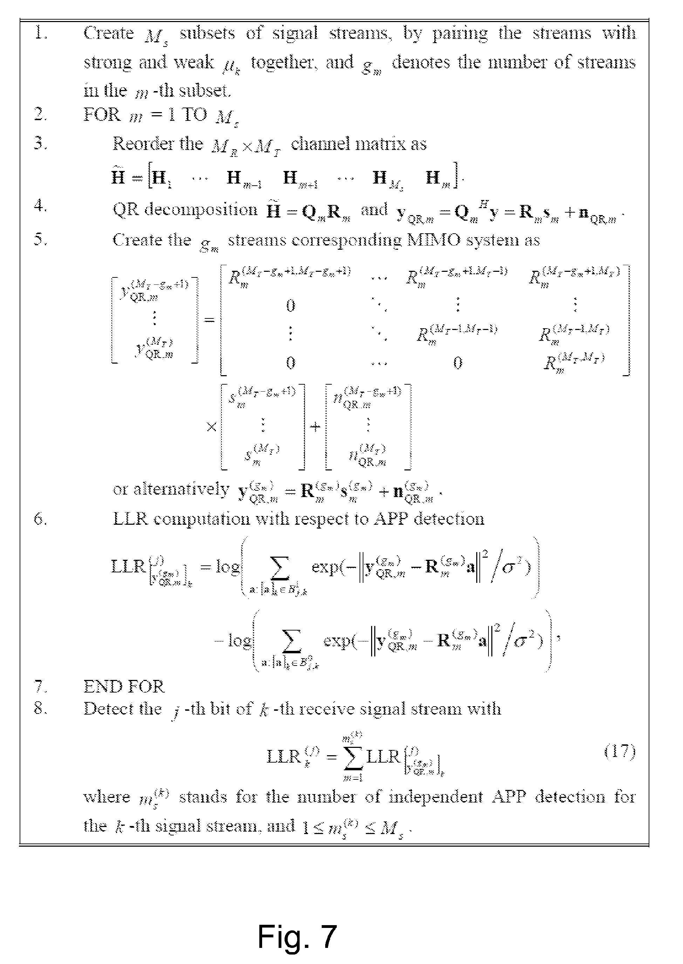

Before presenting simulation results obtained for some embodiments, Figure 7 shall be discussed providing another sequential representation of an embodiment of a method. Figure 7 illustrates a pseudo code of an embodiment providing a method. Figure 7 shows a sequence of 8 steps. In the first step, $M_s$ subsets of signal streams or data signals are formed, e.g. by pairing strong and weak streams or data signals together, which can be evaluated by corresponding

quality information $\mu_k$, $g_m$ may denote the number of streams or data signals in the m-th subset. In the second step a for-loop is indicated, wherein the index m is iterated from 1 to $M_s$, i.e. a counter starting from 1 and counting up to the total number of subsets. In the third step the reordering operation is carried out based on the radio channel matrix **H**, the result of which is referred to as

$$\widetilde{\mathbf{H}} = \begin{bmatrix} \mathbf{H}_1 & \cdots & \mathbf{H}_{m-1} & \mathbf{H}_{m+1} & \cdots & \mathbf{H}_{M_s} & \mathbf{H}_m \end{bmatrix}.$$

Note, that in the third step the column vectors for the desired data signals or streams are moved to the right, which is indicated by $\mathbf{H}_m$ on the right hand side of the above equation, i.e. the dimension of the matrix stays the same only the order of the columns is changed in this step. The index shows that for each subset a different reordering operation may be carried out.

In a fourth step the matrix decomposition is carried out. In this embodiment a QR decomposition is considered, thus

$$\widetilde{\mathbf{H}} = \mathbf{Q}_m \mathbf{R}_m \text{ and } \mathbf{y}_{QR,m} = \mathbf{Q}_m^{\ H} \mathbf{y} = \mathbf{R}_m \mathbf{s}_m + \mathbf{n}_{QR,m}.$$

In other words, the result of the decomposition, i.e. matrices Q and R, can be used for further processing. The modified received signals can for example be obtained according to the above operation $\mathbf{y}_{QR,m} = \mathbf{Q}_m^H \mathbf{y}$. For the subset yields in a fifth step

$$\begin{bmatrix} y_{QR,m}^{(M_T-g_m+1)} \\ \vdots \\ y_{QR,m}^{(M_T)} \end{bmatrix} =$$

$$\begin{bmatrix} R_m^{(M_T-g_m+1,M_T-g_m+1)} & \cdots & R_m^{(M_T-g_m+1,M_T-1)} & R_m^{(M_T-g_m+1,M_T)} \\ 0 & \ddots & \vdots & \vdots \\ \vdots & \ddots & R_m^{(M_T-1,M_T-1)} & R_m^{(M_T-1,M_T)} \\ 0 & \cdots & 0 & R_m^{(M_T,M_T)} \end{bmatrix} \cdot \begin{bmatrix} s_m^{(M_T-g_m+1)} \\ \vdots \\ s_m^{(M_T)} \end{bmatrix} + \begin{bmatrix} n_{QR,m}^{(M_T-g_m+1)} \\ \vdots \\ n_{QR,m}^{(M_T)} \end{bmatrix}$$

or alternatively

$$\mathbf{y}_{QR,m}^{(g_m)} = \mathbf{R}_m^{(g_m)} \mathbf{s}_m^{(g_m)} + \mathbf{n}_{QR,m}^{(g_m)}.$$

Based on the above, LLRs may be calculated in a sixth step, e.g. Log-Likelihood Ratios for APP detection, as

$$\mathrm{LLR}^{(j)}_{\mathbf{y}^{(g_m)}_{\mathrm{QR},m}} = \log\left[\frac{p(b_j = 1 \mid \mathbf{y}^{(g_m)}_{\mathrm{QR},m})}{p(b_j = 0 \mid \mathbf{y}^{(g_m)}_{\mathrm{QR},m})}\right] = \log\left[\frac{\displaystyle\sum_{\mathbf{a}:\,\mathbf{a}\in A^1_j} \exp(-\frac{\left\|\mathbf{y}^{(g_m)}_{\mathrm{QR},m} - \mathbf{R}^{(g_m)}_m\mathbf{a}\right\|^2}{\sigma^2})}{\displaystyle\sum_{\mathbf{a}:\,\mathbf{a}\in A^0_j} \exp(-\frac{\left\|\mathbf{y}^{(g_m)}_{\mathrm{QR},m} - \mathbf{R}^{(g_m)}_m\mathbf{a}\right\|^2}{\sigma^2})}\right].$$

From here, in a subsequent seventh step the $g_m$ receive signal streams in the $m$-th subset can be decoded. The eighth step may then close the for-loop started in the second step.

In embodiments, most unreliable streams $y_1$, $y_2$ and especially the signal streams z, cf. Figure 2, may be processed by multiple separate APP detections, cf. seventh step of Figure 7. The reliability of these signal streams can be improved through additional diversity within the overlapped part of the signal subspace in Figure 2, i.e., by (though not statistically independent) adding the respective LLRs. This method is, thus, denoted as Overlapped Subspace Detection (OSD). Obviously, as a special case, Non-Overlapped Subspace Detection (NOSD) is obtained by choosing

$$A\bigcap B = B\bigcap C = A\bigcap C = \varnothing.$$

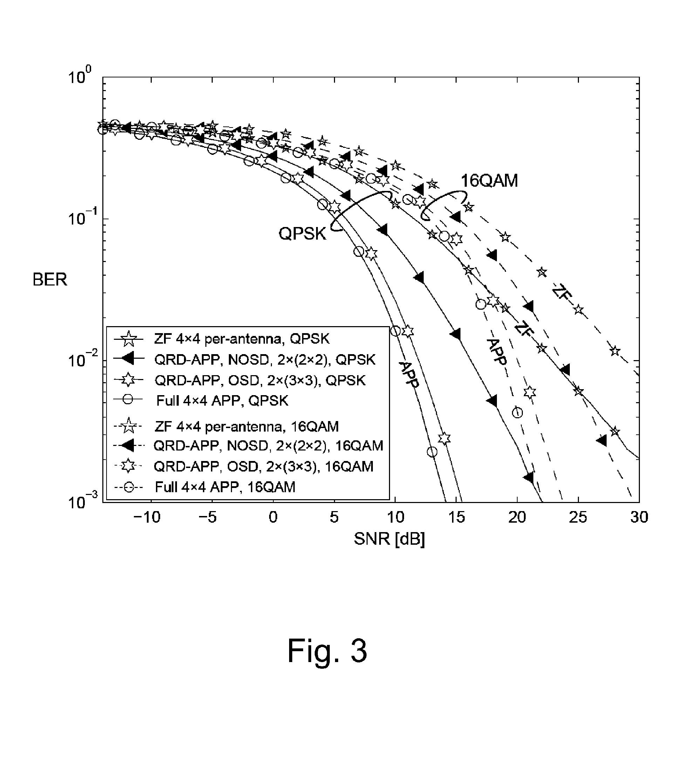

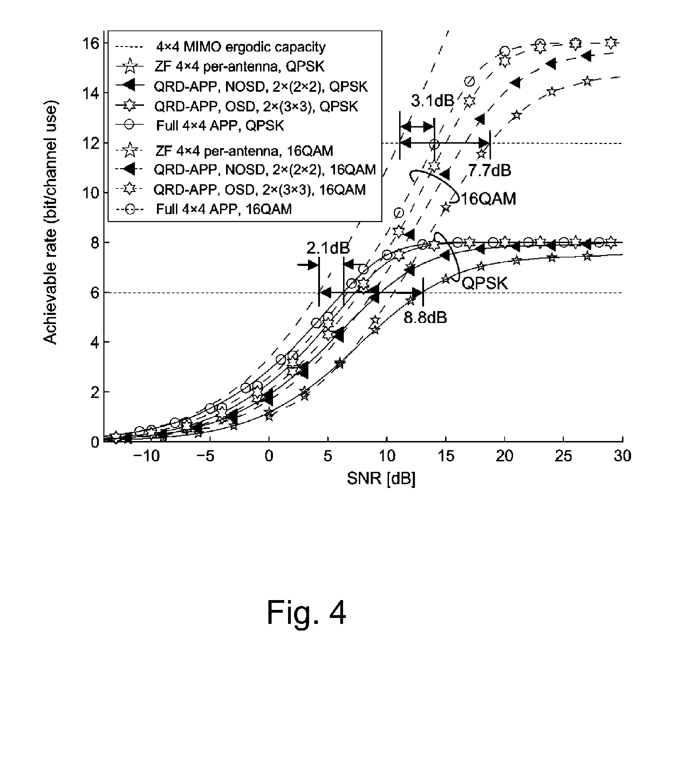

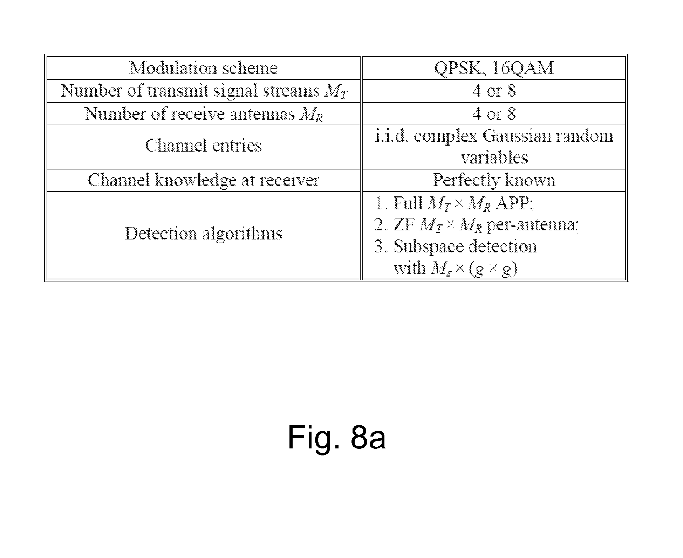

In the following, point-to-point link layer simulation results will be presented to evaluate the performance of embodiments, using the above described OSD and NOSD algorithms. Channel coding is not taken into account for the simulations. Hence, for the simulation results the uncoded Bit Error Rate (BER as abbreviation) is considered right after the LLR computation of the MIMO detection. Figure 3 shows BER versus SNR. The quality of the LLR soft output is evaluated by computing the achievable rate of the equivalent bit channel, cf. Figure 4. For the proposed OSD and NOSD algorithms, the notation $M_s \times (g \times g)$ indicates that $M_s$ detection sets are created, each of which having g signal streams. The table shown in Figure 8a provides further simulation parameters. As modulation schemes QPSK (as abbreviation for Quadrature Phase Shift Keying) and 16QAM (as abbreviation for Quadrature Amplitude Modulation) are considered. The number $M_T$ of transmit signal streams or data signals detected was 4 or 8, a similar number of receive antennas was considered. I.i.d complex Gaussian distributed random variables have been used as channel entries. Furthermore, it was assumed that the channel is perfectly known at the receiver. As detection algorithms aside from the above embodiments, full $M_T \times M_R$ APP and ZF $M_T \times M_R$ per-antenna were considered.

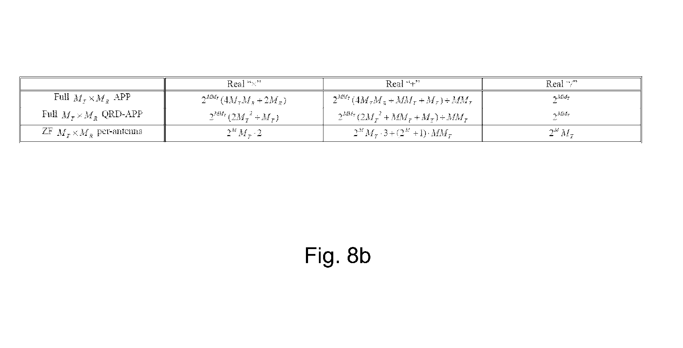

Additionally, the computational requirements for the respective algorithms were considered. Figure 8b shows a table summarizing the computational complexities, i.e. it illustrates a comparison of embodiments considering computational complexity in terms of real multiplications, additions and divisions. The complexity is quantified in terms of real additions, multiplications and divisions during the simulation. For the full $M_T \times M_R$ APP and full $M_T \times M_R$ QRD-APP algorithms, simplifications, such as Jacobian logarithm and Max-log approximation are taken into account, cf. Hochwald, B.M. et al. Notice that the QR decomposition yields a triangular matrix with real entries on the diagonal of matrix **R**, which provides a certain simplification in compared to the full APP algorithm. Compared to the hypothesis enumerations of the LLR soft output computations itself, the computational requirement of the QR decomposition is assumed to be negligible.

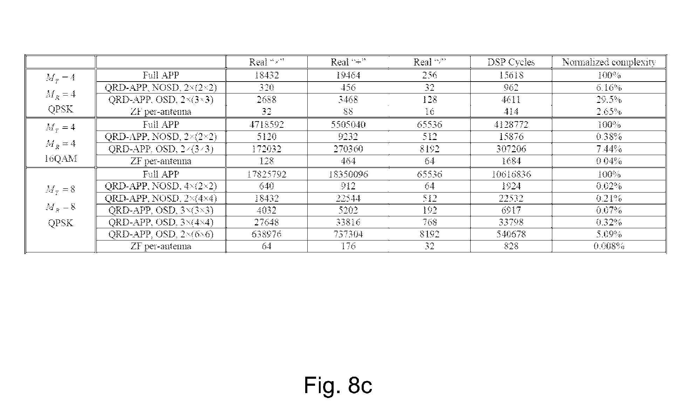

In Figures 3 and 4 the uncoded BER and achievable rates are presented for a 4 × 4 MIMO system. Notice that the APP performance bound can be approached by the embodiment using OSD 2x(3x3) very closely, both for QPSK and 16QAM. It is well known that the diversity order of ZF and full APP are 1 and $M_R$, respectively, if $M_T=M_R$ holds. As being a "hybrid approach", embodiments using the OSD algorithm may improve the diversity order compared to ZF. Figure 8c illustrates a performance comparison of embodiments considering normalized computational complexity. Figure 8c shows that the normalized complexity of OSD 2x(3x3) is approximately 29.5% and 7.44% of that of full APP with QPSK and 16QAM, respectively. Furthermore, considering a code rate 3/4, the gaps to the APP reference performance are 1.0dB and 0.9dB for QPSK and 16QAM, respectively, cf. Figure 4. This indicates that the embodiments using the OSD algorithm achieve a good trade-off between performance and complexity for higher order modulation schemes.

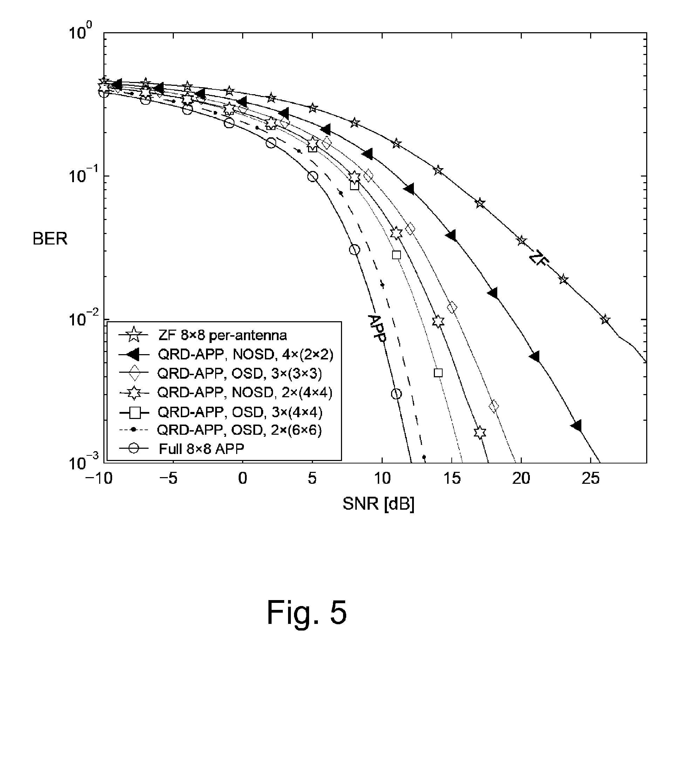

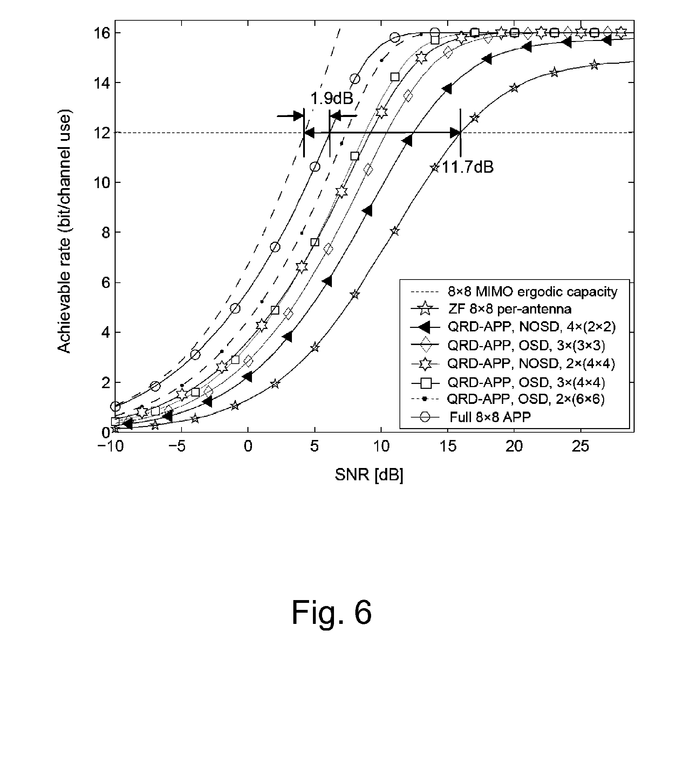

Similarly, in Figures 5 and 6, the uncoded BER and achievable rates are studied for QPSK in an 8×8 MIMO system. Due to the higher number of transmit antennas, there are more degrees of freedom for embodiments to deploy OSD and NOSD algorithms. It can be observed that the OSD 3x(4x4) and OSD 2x(6x6) schemes deliver satisfactory results, with computational requirements approximately 0.32% and 5.09% of that of full APP detection. The corresponding gaps to the APP references are 2.7dB and 1.2dB for code rate 3/4. Again, the embodiment using the OSD algorithm achieves a good trade-off between performance and complexity for MIMO systems with a large number of transmit data streams.

Embodiments may use one of the above methods for subspace detection, which may deploy QR decomposition to triangularize the effective MIMO channel matrix, allowing the creation of multiple subspace detection sets that can be individually processed by optimum APP detection. The detection of weak signal streams can be improved by appropriately choosing overlapping detection regions. Embodiments may therefore achieve a good trade-off between computational complexity and performance, with basic functional blocks being replicated as needed. For example, a $4 \times 4$ APP detection block can be used for the QRD-APP NOSD $2 \times (4 \times 4)$ as well as the QRD-APP OSD $3 \times (4 \times 4)$ algorithm, with deterministic computational requirements, amenable to hardware implementation. As an alternative to QRD, embodiments may use other matrix triangularization approaches, e.g. Cholesky decomposition, which has low computational complexity.

Embodiments may provide advantages on hardware designs. For instance, APP processing function block with g=4 is not relatively complex. The function block can be adapted to embodiments using QRD-APP NOSD $2 \times (4 \times 4)$ and QRD-APP OSD $3 \times (4 \times 4)$ algorithms. The corresponding computational requirement can be deterministic, which may be advantageous for hardware design. With the technology and silicon integration advances, MIMO systems may move more and more towards larger antenna array configurations (e.g., see AAA, as abbreviation for active antenna array). Embodiments may provide power and cost efficient detection algorithms for such systems. Large scale MIMO is expected to be deployed within the next 2-4 years within the LTE-Advanced (as abbreviation for long term evolution). LTE-R10 already has specified MIMO systems based on 8 antennas.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for determining", "means for generating", "means for calculating", "means for estimating", "means for detecting", "processors", may be provided through the use of dedicated hardware as e.g. "a determiner", "a generator", "a calculator", "an estimator", "a detector", as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An apparatus (100) for detecting a first and a second data signal from a plurality of receive signals, the first and the second data signal being comprised in a plurality of transmitted data signals being transmitted using a plurality of transmit antennas and being received using a plurality of receive antennas, the apparatus comprising
an input (110) for a radio channel matrix $\mathbf{H}$, representing a radio channel between the plurality of transmit antennas and the plurality of receive antennas, the radio channel matrix $\mathbf{H}$ having at least one channel coefficient for each combination of one of the plurality of transmit antennas and one of the plurality of receive antennas;
means (120) for determining a first and a second sub-matrix based on the radio channel matrix $\mathbf{H}$, the first and the second sub-matrix having less coefficients than the radio channel matrix $\mathbf{H}$ and the first and the second sub-matrix having different coefficients;
means (130) for generating modified first and second receive signals based on the radio channel matrix $\mathbf{H}$ and the first and the second sub-matrix;
means (140) for calculating first reliability information on the first and second data signal based on the first sub-matrix and the modified first receive signals, and for calculating second reliability information on the first and second data signal based on the second sub-matrix and the modified second receive signals; and
an output (150) for detecting the first and the second data signal based on the first and the second reliability information.

2. The apparatus (100) of claim 1, further comprising means (112) for estimating the radio channel matrix $\mathbf{H}$ between the plurality of transmit antennas and the plurality of receive antennas, which is coupled to the input (110), and further comprising means (152) for detecting the first and the second data signal, which is coupled to the output (150).

3. The apparatus (100) of claim 1, wherein the means (120) for determining is adapted for determining the first and second sub-matrix by determining quality information on the first and second data signal based on the plurality of receive signals and the radio channel matrix $\mathbf{H}$, the first and the second sub-matrix being based on a modification of the radio channel matrix $\mathbf{H}$ based on the quality information.

4. The apparatus (100) of claim 3, wherein the first sub-matrix is based on a first reordering operation on the radio channel matrix $\mathbf{H}$ based on the quality information and a subsequent decomposition of the radio channel matrix $\mathbf{H}$, and wherein the second sub-matrix is based on a second reordering operation on the radio channel matrix $\mathbf{H}$ based on the quality information and a subsequent decomposition of the radio channel matrix $\mathbf{H}$.

5. The apparatus (100) of claim 4, wherein the first sub-matrix is a sub-matrix of a triangular matrix resulting from the decomposition of the reordered radio channel matrix $\mathbf{H}$ according to the first reordering operation, and wherein the second sub-matrix is a sub-matrix of a triangular matrix resulting from the decomposition of the reordered radio channel matrix $\mathbf{H}$ according to the second reordering operation.

6. The apparatus (100) of claim 4, wherein the reordering corresponds to a selection of a subset of transmit signals, the subset of transmit signals being selected based on the quality information, where for the first reordering operation transmit signals are selected among which the quality information indicates the best quality for the first data signal, and where for the second reordering operation transmit signals are selected among which the quality information indicates the best quality for the second data signal, or wherein the quality information indicates a better quality for the first data signal than for the second data signal and wherein the second data signal is selected in both reordering operations.

7. The apparatus (100) of claim 3, wherein the matrix decompositions correspond to a QR-decomposition or a Cholesky-decomposition and/or wherein the means (130) for generating is adapted for generating the modified first and second receive signals based on a result of the matrix decomposition.

8. The apparatus (100) of claim 1, wherein the means (140) for calculating is adapted for calculating Log-Likelihood-Ratios of transmit symbols of the first and the second data signal as reliability information.

9. The apparatus (100) of claim 1, wherein the means (150) for detecting is adapted for detecting the first and the second data signal based on a Maximum-Likelihood-Detection.

10. The apparatus (100) of claim 1, further adapted for detecting data signals for all of the transmitted data signals, wherein the means (120) for determining is adapted for determining at least two sub-matrices based on the radio channel matrix **H,** wherein the at least two sub-matrices comprise at least one coefficient for each of the plurality of transmitted data signals.

11. The apparatus (100) of claim 10, wherein the means (120) for determining is adapted for determining subsets of data signals and for determining one sub-matrix for each subset of data signals, where each of the transmitted data signals is comprised in at least one of the subsets,
wherein the means (130) for generating is adapted for generating modified received signals for each subset,
wherein the means (140) for calculating is further adapted for calculating reliability information for each data signal in each subset, and
wherein the means (150) for detecting is adapted for detecting each data signal based on the reliability information.

12. The apparatus (100) of claim 11, wherein the means (150) is adapted for performing a Maximum-Likelihood-Detection per subset and for combining the Maximum-Likelihood-Detection results of each subset to detect the data signals.

13. The apparatus (100) of claim 11, wherein the means (120) for determining is adapted for determining the subsets such that each of the transmitted signals is only comprised in one subset or such that at least one of the transmitted signals is comprised in at least two subsets.

14. A method for detecting a first and a second data signal from a plurality of receive signals, the first and the second data signal being comprised in a plurality of transmitted data signals being transmitted using a plurality of transmit antennas and being received using a plurality of receive antennas, comprising
inputting a radio channel matrix **H,** representing a radio channel between the plurality of transmit antennas and the plurality of receive antennas, the radio channel matrix **H** having at least one channel coefficient for each combination of one of the plurality of transmit antennas and one of the plurality of receive antennas;
determining a first and a second sub-matrix based on the radio channel matrix **H,** the first and the second sub-matrix having less coefficients than the radio channel matrix **H** and the first and the second sub-matrix having different coefficients;
generating modified first and second receive signals based on the radio channel matrix **H** and the first and the second sub-matrix;
calculating first reliability information on the first and second data signal based on the first sub-matrix and the modified first receive signals and calculating second reliability information on the first and second data signal based on the second sub-matrix and the modified second receive signals; and
detecting the first and the second data signal based on the first and the second reliability information.

15. A computer program having a program code for performing the method of claim 14 when the computer program is executed on a computer or processor.

Figure 1a

Figure 1b

$$x \in (A{-}B) \cap (A{-}C)$$

$$z \in A{\cap}B{\cap}C$$

$$y_1 \in (A{\cap}B) - (A{\cap}C)$$

$$y_2 \in (A{\cap}C) - (A{\cap}B)$$

Fig. 2

Fig. 3

Fig. 4

Fig. 5

Fig. 6

1. Create $M_s$ subsets of signal streams, by pairing the streams with strong and weak $\mu_k$ together, and $g_m$ denotes the number of streams in the $m$-th subset.

2. FOR $m = 1$ TO $M_s$

3.     Reorder the $M_R \times M_T$ channel matrix as
$$\tilde{\mathbf{H}} = \begin{bmatrix} \mathbf{H}_1 & \cdots & \mathbf{H}_{m-1} & \mathbf{H}_{m+1} & \cdots & \mathbf{H}_{M_s} & \mathbf{H}_m \end{bmatrix}.$$

4.     QR decomposition $\tilde{\mathbf{H}} = \mathbf{Q}_m \mathbf{R}_m$ and $\mathbf{y}_{QR,m} = \mathbf{Q}_m^H \mathbf{y} = \mathbf{R}_m \mathbf{s}_m + \mathbf{n}_{QR,m}$.

5.     Create the $g_m$ streams corresponding MIMO system as
$$\begin{bmatrix} y_{QR,m}^{(M_T - g_m + 1)} \\ \vdots \\ y_{QR,m}^{(M_T)} \end{bmatrix} = \begin{bmatrix} R_m^{(M_T - g_m + 1, M_T - g_m + 1)} & \cdots & R_m^{(M_T - g_m + 1, M_T - 1)} & R_m^{(M_T - g_m + 1, M_T)} \\ 0 & \ddots & \vdots & \vdots \\ \vdots & \ddots & R_m^{(M_T - 1, M_T - 1)} & R_m^{(M_T - 1, M_T)} \\ 0 & \cdots & 0 & R_m^{(M_T, M_T)} \end{bmatrix}$$
$$\times \begin{bmatrix} s_m^{(M_T - g_m + 1)} \\ \vdots \\ s_m^{(M_T)} \end{bmatrix} + \begin{bmatrix} n_{QR,m}^{(M_T - g_m + 1)} \\ \vdots \\ n_{QR,m}^{(M_T)} \end{bmatrix}$$

    or alternatively $\mathbf{y}_{QR,m}^{(g_m)} = \mathbf{R}_m^{(g_m)} \mathbf{s}_m^{(g_m)} + \mathbf{n}_{QR,m}^{(g_m)}$.

6.     LLR computation with respect to APP detection
$$\mathrm{LLR}_{[\mathbf{y}_{QR,m}^{(g_m)}]_k}^{(j)} = \log\left( \sum_{\mathbf{a}:[\mathbf{a}]_k \in B_{j,k}^1} \exp\left(-\left\| \mathbf{y}_{QR,m}^{(g_m)} - \mathbf{R}_m^{(g_m)} \mathbf{a} \right\|^2 \Big/ \sigma^2 \right) \right)$$
$$- \log\left( \sum_{\mathbf{a}:[\mathbf{a}]_k \in B_{j,k}^0} \exp\left(-\left\| \mathbf{y}_{QR,m}^{(g_m)} - \mathbf{R}_m^{(g_m)} \mathbf{a} \right\|^2 \Big/ \sigma^2 \right) \right),$$

7. END FOR

8. Detect the $j$-th bit of $k$-th receive signal stream with
$$\mathrm{LLR}_k^{(j)} = \sum_{m=1}^{m_s^{(k)}} \mathrm{LLR}_{[\mathbf{y}_{QR,m}^{(g_m)}]_k}^{(j)} \qquad (17)$$
where $m_s^{(k)}$ stands for the number of independent APP detection for the $k$-th signal stream, and $1 \leq m_s^{(k)} \leq M_s$.

Fig. 7

| Modulation scheme | QPSK, 16QAM |
|---|---|
| Number of transmit signal streams $M_T$ | 4 or 8 |
| Number of receive antennas $M_R$ | 4 or 8 |
| Channel entries | i.i.d. complex Gaussian random variables |
| Channel knowledge at receiver | Perfectly known |
| Detection algorithms | 1. Full $M_T \times M_R$ APP;<br>2. ZF $M_T \times M_R$ per-antenna;<br>3. Subspace detection with $M_s \times (g \times g)$ |

# Fig. 8a

| | Real "×" | Real "+" | Real "√" |
|---|---|---|---|
| Full $M_T \times M_R$ APP | $2^{MM_T}(4M_TM_R+2M_R)$ | $2^{MM_T}(4M_TM_R+MM_T+M_T)+MM_T$ | $2^{MM_T}$ |
| Full $M_T \times M_R$ QRD-APP | $2^{MM_T}(2M_T^2+M_T)$ | $2^{MM_T}(2M_T^2+MM_T+M_T)+MM_T$ | $2^{MM_T}$ |
| ZF $M_T \times M_R$ per-antenna | $2^M M_T \cdot 2$ | $2^M M_T \cdot 3+(2^M+1)\cdot MM_T$ | $2^M M_T$ |

Fig. 8b

| | | | Real "×" | Real "+" | Real "√" | DSP Cycles | Normalized complexity |
|---|---|---|---|---|---|---|---|
| $M_T = 4$ | | Full APP | 18432 | 19464 | 256 | 15618 | 100% |
| | | QRD-APP, NOSD, 2×(2×2) | 320 | 456 | 32 | 962 | 6.16% |
| $M_R = 4$ | | QRD-APP, OSD, 2×(3×3) | 2688 | 5468 | 128 | 4611 | 29.5% |
| QPSK | | ZF per-antenna | 32 | 88 | 16 | 414 | 2.65% |
| $M_T = 4$ | | Full APP | 4718592 | 5505040 | 65536 | 4128772 | 100% |
| | | QRD-APP, NOSD, 2×(2×2) | 5120 | 9232 | 512 | 15876 | 0.38% |
| $M_R = 4$ | | QRD-APP, OSD, 2×(3×3) | 172032 | 270360 | 8192 | 307206 | 7.44% |
| 16QAM | | ZF per-antenna | 128 | 464 | 64 | 1684 | 0.04% |
| | | Full APP | 17825792 | 18350096 | 65536 | 10616836 | 100% |
| $M_T = 8$ | | QRD-APP, NOSD, 4×(2×2) | 640 | 912 | 64 | 1924 | 0.02% |
| | | QRD-APP, NOSD, 2×(4×4) | 18432 | 22544 | 512 | 22532 | 0.21% |
| $M_R = 8$ | | QRD-APP, OSD, 3×(3×3) | 4032 | 5202 | 192 | 6917 | 0.07% |
| | | QRD-APP, OSD, 3×(4×4) | 27648 | 33816 | 768 | 33798 | 0.32% |
| QPSK | | QRD-APP, OSD, 2×(6×6) | 638976 | 757304 | 8192 | 540678 | 5.09% |
| | | ZF per-antenna | 64 | 176 | 32 | 828 | 0.008% |

# Fig. 8c

Europäisches
Patentamt

European
Patent Office

Office européen
des brevets

## EUROPEAN SEARCH REPORT

Application Number

EP 11 30 5301

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/03568 A1 (IOSPAN WIRELESS INC [US]) 10 January 2002 (2002-01-10) * the whole document * ----- | 1-15 | INV. H04B7/08 |
| X | US 2009/103641 A1 (MASUI HIRONARI [JP] ET AL) 23 April 2009 (2009-04-23) * the whole document * ----- | 1-15 | |
| X | US 2010/255790 A1 (FARAJIDANA AMIR [US] ET AL) 7 October 2010 (2010-10-07) * abstract * * paragraphs [0070] - [0075], [0089] * ----- | 1-15 | |
| A | US 2006/109891 A1 (GUO YUANBIN [US] ET AL) 25 May 2006 (2006-05-25) * abstract * * paragraphs [0012] - [0014], [0040], [0043], [0045], [0058], [0063] - [0069] * ----- | 1-15 | |

TECHNICAL FIELDS
SEARCHED      (IPC)

H04B

The present search report has been drawn up for all claims

| Place of search | Date of completion of the search | Examiner |
|---|---|---|
| Munich | 19 August 2011 | Fernández Cuenca, B |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 2 501 054 A1**

## ANNEX TO THE EUROPEAN SEARCH REPORT
## ON EUROPEAN PATENT APPLICATION NO.

EP 11 30 5301

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2011

| Patent document cited in search report | | Publication date | Patent family member(s) | | Publication date |
|---|---|---|---|---|---|
| WO 0203568 | A1 | 10-01-2002 | AU | 5525301 A | 14-01-2002 |
| | | | AU | 7020701 A | 14-01-2002 |
| | | | WO | 0203557 A1 | 10-01-2002 |
| US 2009103641 | A1 | 23-04-2009 | JP | 2009100408 A | 07-05-2009 |
| US 2010255790 | A1 | 07-10-2010 | WO | 2010114935 A1 | 07-10-2010 |
| US 2006109891 | A1 | 25-05-2006 | CN | 101091366 A | 19-12-2007 |
| | | | EP | 1815655 A1 | 08-08-2007 |
| | | | WO | 2006056837 A1 | 01-06-2006 |

EPO FORM P0459

For more details about this annex : see Official Journal of the European Patent Office, No. 12/82

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FOSCHINI, G. J. ; GANS, M. J.** On limits of wireless comunications in a fading environment when using multiple antennas. *Wireless Personal Communications,* March 1998, vol. 6 (3), 311-335
- **TELATAR, I. E.** Capacity of multi-antenna Gaussian channels. *European Transactions on Telecommunications,* November 1999, vol. 10 (6), 585-595
- **ALAMOUTI, S. M.** A simple transmit diversity technique for wireless communications. *IEEE Journal on Selected Areas in Communications,* October 1998, vol. 16 (8), 1451-1458
- **BOUDREAU, G. ; PANICKER, J. ; NING GUO ; RUI CHANG ; NENG WANG ; VRZIC, S.** Interference Coordination and Cancellation for 4G Networks. *IEEE Communications Magazine,* April 2009, vol. 47 (4), 74-81
- **LARSSON, E.G.** MIMO Detection Methods: How They Work. *IEEE Signal Processing Magazine,* May 2009, vol. 26 (3), 91-95
- **WINDPASSINGER, C. ; LAMPE, L. ; FISCHER, R.F.H. ; HEHN, T.** A performance study of MIMO detectors. *IEEE Transactions on Wireless Communications,* August 2006, vol. 5 (8), 2004-2008
- **HOCHWALD, B.M. ; TEN BRINK, S.** Achieving Near-Capacity on a Multiple-Antenna Channel. *IEEE Transactions on Communications,* 2003, vol. 51 (3), 389-399
- **FOSCHINI, G.J. ; KARAKAYALI, K. ; VALENZUELA, R.A.** Coordinating multiple antenna cellular networks to achieve enormous spectral efficiency. *IEE Proceedings Communications,* August 2006, vol. 153, 548-555

- **HUANG, H. ; TRIVELLATO, M. ; HOTTINEN, A. ; SHAFI, M. ; SMITH, P. ; VALENZUELA, R.** Increasing downlink cellular throughput with limited network MIMO coordination. *IEEE Transactions on Wireless Communications,* June 2009, vol. 8 (6), 2983-2989
- **MOHAMMED, S.K. ; ZAKI, A. ; CHOCKALINGAM, A. ; RAJAN, B.S.** High-Rate Space-Time Coded Large-MIMO Systems: Low-Complexity Detection and Channel Estimation. *IEEE Journal of Selected Topics in Signal Processing,* December 2009, vol. 3 (6), 958-974
- **MCKAY, M.R. ; COLLINGS, I.B.** Capacity and Performance of MIMO-BICM With Zero-Forcing Receivers. *IEEE Transactions on Communications,* January 2005, vol. 53 (1), 74-83
- **SEETHALER, D. ; MATZ, G. ; HLAWATSCH, F.** An Efficient MMSE-Based Demodulator for MIMO Bit-Interleaved Coded Modulation. *Proceedings of IEEE Global Telecommunications Conference 2004 (GLOBECOM'04),* November 2004, 2455-2459
- **ARIYAVISITAKUL, S.L. ; JUN ZHENG ; OJARD, E. ; JOONSUK KIM.** Subspace Beamforming for Near-Capacity MIMO Performance. *IEEE Transactions on Signal Processing,* 2008, vol. 56 (11), 5729-5733
- **TEN BRINK, S.** Designing Iterative Decoding Schemes with the Extrinsic Information Transfer Chart. *AEÜ International Journal of Electronics and Communications,* November 2000, vol. 54 (6), 389-398